# EUROPÄISCHE PATENTSCHRIFT

(11) **EP 0 502 192 B1**
(45) Veröffentlichungstag und Bekanntmachung des Hinweises auf die Patenterteilung: **29.11.1995**
(21) Anmeldenummer: 91903929.7
(22) Anmeldetag: 31.08.1990
(51) Int. Cl.: B01D 53/56

(54) **VERFAHREN ZUM ENTFERNEN VON STICKOXIDEN AUS ABGASEN**
METHOD FOR REMOVAL OF NITROGEN OXIDES FROM EXHAUST GASES
PROCEDE D'ELIMINATION D'OXYDES AZOTES D'EMISSIONS DE GAZ

(43) Veröffentlichungstag der Anmeldung: 09.09.1992
(73) Patentinhaber: INSTITUT KATALIZA SIBIRSKOGO OTDELENIA AKADEMII NAUK SSSR, Novosibirsk, 630090 (SU)
(72) Erfinder: MATROS, Jury Shaevich, Novosibirsk, 630072 (SU); NOSKOV, Alexandr Stepanovich, Novosibirsk, 630090 (SU); BOBROVA, Ljudmila Nikolaevna, Novosibirsk, 630132 (SU); SLAVINSKAYA, Elena Markovna, Novosibirsk, 630072 (SU)
(74) Vertreter: Patentanwälte Zellentin & Partner
(86) Internationale Anmeldenummer: SU9000212
(87) Internationale Veröffentlichungsnummer: WO9204105

(56) Entgegenhaltungen:
- DE-A- 3 505 354
- FR-A- 2 605 243
- SU-A- 0 882 056
- SU-A- 1 295 147
- US-A- 4 246 234

## Beschreibung

Die Erfindung bezieht sich auf Verfahren zur Reinigung von Abgasen von Stickstoffoxiden. Sie löst Probleme des Schutzes der Atmosphäre vor Verunreinigung durch toxische Beimengungen, insbesondere Stickstoffoxide (NOₓ).

Die Erfindung kann bei der Entgiftung der Abgase verschiedener Produktionsbetriebe von Stickstoffoxiden Anwendung finden.

Es existiert eine Reihe von Verfahren zur Abgasreinigung von Stickstoffoxiden. Diese Methoden beruhen entweder auf der Absorption von Stickstoffoxiden durch flüssige Absorptionsmittel, oder auf ihrer Umwandlung (Reduktion) in unschädliche Verbindungen (Wasserdämpfe und Stickstoff). Am meisten verbreitet sind Verfahren zur Reduktion von Stickstoffoxiden mit Hilfe von Ammoniak (sogenannte selektive katalytische Reduktion SKR). Die SKR-Prozesse erlauben es, die Reduktion von Stickstoffoxiden bis zum elementaren Stickstoff und Wasserdampf in Anwesenheit von Sauerstoff, der in Abgasen enthalten ist, durchzuführen. Die SKR-Prozesse werden in einer Schicht eines granulierten körnigen Katalysators oder auch mit wabenartigen Blockkatalysatoren durchgeführt. Die Reaktionen der Reduktion von Stickstoffoxiden führt man bei Temperaturen durch, welche die Temperatur des Reaktionsbeginns übersteigen und die Bildung von Ammoniumsalzen ausschließen. Die Ansammlung von Salzen in beträchtlichen Mengen kann bei deren nachfolgender Zersetzung zur Zerstörung des Katalysators und zur Verkürzung seiner Nutzungsdauer führen. Diese Beschränkungen zwingen dazu, die Gastemperatur am Eintritt in die Katalysatorschicht nicht unter 180°C aufrechtzuerhalten. Das Ammoniak wird in die auf eine Temperatur von 180 bis 320°C erwärmten zu reinigenden Gase unmittelbar vor der Katalysatorschicht eingeführt (Spravochnik azotchika, Zhavoronkov N.I. u.a., 1986, Khimia (Moskau), Bd. 1, SS. 220-221). Oft übersteigt die Temperatur von Abgasen, die Stickstoffoxide enthalten, nicht 40 bis 50°C. Dies ist nach der Absorptionsreinigung der Gase von Stickstoffoxiden oder nach der Nassentschwefelung der Rauchgase zu verzeichnen. Zur Durchführung des SKR-Prozesses sollen die Abgase auf die Temperatur des Reaktionsbeginns erwärmt werden. Die zu reinigenden Gase können durch Zusatz heißer Rauchgase oder durch Wärme gereinigter Abgase in Wärmeaustauscheinrichtungen erwärmt werden.

Das erwärmte zu reinigende Gas vermischt man mit dem Ammoniak, worauf das Gemisch die Katalysatorschicht passiert, wo eine weitere Steigerung der Temperatur dank der Wärme der Reaktionen der Wechselwirkung von Stickstoffoxiden mit dem Ammoniak geschieht. Das aus dem Wärmeaustauscher austretende gekühlte gereinigte Gas wird in die Atmosphäre ausgestoßen (Chemie-Ingenieur-Technik, 1987, Bd. 59, Nr. 8, D.Deggim, J.Poller, K.Weinzierl, Die Bedeutung der Chemietechnik für fortgeschrittene Technologien zur Stromerzeugung, S. 629-636).

Die Realisierung eines derartigen Verfahrens erfordert komplizierte und sperrige Wärmeaustauscheinrichtungen und einen erheblichen Verbrauch an zusätzlichem Brennstoff für die Erwärmung des zu reinigenden Gemisches. Bei der Durchführung dieses Verfahrens entstehen außerdem Schwierigkeiten bei der Aufrechterhaltung hoher Reinigungsgrade bei Schwankungen der Konzentration von Stickstoffoxiden in den zu entgiftenden Gasen. Eine Vergrößerung des Volumens der Abgase kann zur Kühlung von am Gaseintritt anliegenden Abschnitten der Katalysatorschicht und zur Ablagerung von Ammoniumsalzen an denselben führen, was eine Verkürzung der Nutzungsdauer des Katalysators bis zu 12 - 16 Monaten zur Folge hat. Bei einer Abnahme der Konzentration von Stickstoffoxiden (NOₓ) kann sich der Restammoniakgehalt im gereinigten Gas vergrößern, was auf Kosten einer Temperaturerniedrigung und der Störung des stöchiometrischen Verhältnisses (Stickstoffoxide/Ammoniak) geschieht. In der Industrie wird in realisierten SKR-Prozessen eine Ansammlung von Ammoniumsalzen aufgrund der Wechselwirkung von Reststickstoffoxiden und Ammoniak in Abschnitten von Gaszügen mit niedriger Temperatur beobachtet. Um eine Ansammlung von Ammoniumsalzen in beträchtlichen Mengen zu beseitigen, trifft man gewöhnlich zusätzliche Maßnahmen zum Spülen von Gaszügen.

Bei der Abgasreinigung von Stickstoffoxiden nach einem solchen Verfahren ist der Reinigungsgrad nicht ausreichend hoch, meist nicht höher als 90 bis 95 %. Die Ursachen für die niedrigen Grade der Reinigung der Abgase von Stickstoffoxiden sind eine schlechte Vermischung des eingeführten Reduktionsmittels (des Ammoniaks) mit dem Abgas und ungenügend hohe Temperaturen in der Katalysatorschicht, wo die Reaktion der Stickstoffoxide mit dem Ammoniak vonstatten geht.

Aus der DE-A-35 05 354 ist bekannt, daß man Rauchgase, die gegebenenfalls an SO₂ abgereichert sind, in einem Wärmeaustauscher erwärmt, über einen zur Umwandlung von Stickoxiden geeigneten Katalysator leitet und in einem weiteren Wärmeaustauscher kühlt, um unerwünschte Bestandteile zu entfernen. Dem Gas wird dabei Ammoniak zugesetzt, wonach es über mehrere Katalysatorschichten geleitet wird. Zur Ausnutzung der Energie werden dabei die beiden Austauscher vorzugsweise abwechselnd als Wärmer und Kühler geschaltet, wobei jedoch die Durchströmungsrichtung im Katalysator vorzugsweise konstant ist. Der Wirkungsgrad der NOₓ-Entfernung solcher Vorrichtungen beträgt ca. 80% und ist durch Zugabe von Ammoniak nicht zu steigern, da sonst Ammoniakreste im Abgas verbleiben.( Müller K. Abgasreinigungsanlage HWK, Sandreuth, BWK 1985 Bd. 37, Nr. 3 S. 85-86)
Die Abgasreinigung von Stickstoffoxiden nach den bekannten katalytischen Verfahren gestattet also zur Zeit nicht, hohe technisch-wirtschaftliche Kennziffern des Prozesses zu erzielen, was durch einen erheblichen Energieaufwand für seine Durchführung, durch eine Verkürzung der Nutzungsdauer des Katalysators und einen unzureichend hohen Reinigungsgrad bedingt ist.

Der Erfindung liegt die Aufgabe zugrunde, ein solches Verfahren zur Abgasreinigung von Stickstoffoxiden zu schaffen, das die Reinigung mit einem hohen Reinigungsgrad in der Größenordnung von 99% unabhängig von der Änderung der Konzentration von Stickstoffoxiden im Abgas bei minimalem Energieaufwand, langer Nutzungsdauer des Katalysators und praktisch vollständigem Fehlen von Ammoniak im gereinigten Gas sicherstellt.

Diese Aufgabe wird dadurch gelöst, daß ein solches Verfahren zur Abgasreinigung von Stickstoffoxiden durch Hindurchleiten von Abgasen durch eine Katalysatorschicht in Anwesenheit von Ammoniak oder einer ammoniakhaltigen Verbindung bei einer Temperatur zwischen 180 und 600°C unter Gewinnung eines gereinigten Gases vorgeschlagen wird, bei welchem erfindungsgemäß die Katalysatorschicht aus mindestens zwei Teilen besteht und man das Ammoniak oder die ammoniakhaltige Verbindung zwischen den Teilen der Katalysatorschicht einführt, wobei man jede nachfolgende Richtung des Hindurchleitens des Abgases und die Ableitung des gereinigten Gases bei Erreichung einer Temperatur des Gasgemisches von 30 bis 400°C in einem Abstand von der Einführungsstelle des Abgases in die Katalysatorschicht gleich 10 bis 90% von der Gesamthöhe der Katalysatorschicht gegenüber der vorhergehenden Richtung umkehrt.

Bei der Herstellung von Salpetersäure, bei der Verbrennung verschiedener Brennstoffarten und bei einer Reihe anderer industrieller Prozesse bilden sich Stickstoffoxide. Ihr Gehalt in den Abgasen beträgt 2 bis 10 g/m³ (nach der Absorption bei der Herstellung der Salpetersäure) und 0,6 bis 1,5 g/m³ (bei Verbrennung von Brennstoff).

In Abgasen ist neben den Stickstoffoxiden Wasserdampf vorhanden. In manchen Fällen entspricht der Gehalt von Wasserdämpfen dem Druck eines gesättigten Wasserdampfes bei einer Temperatur von 20 bis 40°C. Infolge einer Wechselwirkung von Stickstoffoxiden, Ammoniak und Wasserdämpfen können sich bei einer Temperatur unter 180°C Ammoniumsalze (Nitrite und Ammoniumnitrite) bilden und ansammeln.

Die nachfolgende Zersetzung von Ammoniumsalzen hat oft einen explosiven Charakter und setzt den Katalysator außer Betrieb.

Daher ist der Prozeß der Abgasreinigung von Stickstoffoxiden bei Temperaturen nicht unter 180°C durchzuführen.

An den für SKR-Prozesse geeigneten Katalysatoren läuft neben der Reaktion der Wechselwirkung von NOₓ mit Ammoniak (Reduktion von Stickstoffoxiden) die Reaktion der eigentlichen Oxydation des Ammoniaks durch in den Abgasen enthaltenen Sauerstoff ab. Bei Temperaturen unter 350 - 500°C ist die Geschwindigkeit der Reaktion der Oxydation des Ammoniaks bedeutend niedriger als die Geschwindigkeit seiner Wechselwirkung mit NOₓ. Bei Temperaturen über 600°C wird der größte Teil des Ammoniaks durch Sauerstoff oxydiert und nicht mit den Stickstoffoxiden in Wechselwirkung stehen, was zur Senkung des Reinigungsgrades führen kann.

Somit ist der Temperaturbereich 180 - 600°C bei der Durchführung des katalytischen Prozesses der Abgasreinigung von Stickstoffoxiden optimal für Stickstoffoxide enthaltene Abgase, welche sich in verschiedenen Arten der Industrieproduktion bilden.

Als Katalysatoren der Abgasreinigung von Stickstoffoxiden kann man Katalysatoren der Reduktion von Stickstoffoxid auf Grundlage von Edelmetallen, z.B. von Palladium, oder aber Oxidkatalysatoren verwenden, bei denen als aktive Komponente Oxide von Vanadin, Eisen, Kupfer, Zink und anderen Metallen oder ihre Gemische dienen.

Die Katalysatoren der Reduktion von Stickstoffoxiden durch Ammonium haben in der Regel entweder die Form von Granalien unterschiedlicher Gestalt (Würfel, Zylinder, Ring) oder die Form von Blöcken mit Wabenstruktur. Der Einsatz von Blöcken mit Wabenstruktur vermindert den hydraulischen Widerstand der Katalysatorschicht beträchtlich (um das 10- bis 100fache).

Als Reduktionsmittel für Stickstoffoxide kann gasförmiges Ammoniak oder Ammoniak verwendet werden, das in chemischen Verbindungen enthalten ist. Als solche Verbindungen kann man beispielsweise Ammoniakwasser oder wäßrige Harnstofflösung einsetzen.

Wie bereits vorstehend ausgeführt, teilt man die Katalysatorschicht mindestens in zwei Teile auf und führt Ammoniak oder ammoniakhaltige Verbindungen zwischen den Teilen der Katalysatorschicht ein. Das Ammoniak oder die ammoniakhaltige Verbindung wird mit den Abgasen vermischt, die die vorgewärmten Teile der Katalysatorschicht passiert haben. Bei der Wechselwirkung des Ammoniaks mit den Stickstoffoxiden wird am Katalysator Wärme entwickelt. Als Ergebnis stellt sich in der Katalysatorschicht ein Temperaturprofil ein, das sich in Richtung des Hindurchleitens des zu reinigenden Gases durch die Katalysatorschicht bewegt. Die Ausbreitung der sich entwickelnden Wärme über die Katalysatorschicht führt zur Erwärmung der Abschnitte der Katalysatorschicht, die am Austritt des gereinigten Gases anliegen. Wenn man das Gasgemisch hinreichend lange in ein und derselben Richtung weiterzuführt, so gibt die Katalysatorschicht die darin gespeicherte Wärme vollständig ab, und auf der gesamten Länge der Schicht stellt sich eine Temperatur ein, die der Eintrittstemperatur gleich ist, wobei der Grad der Reinigung von Stickstoffoxiden praktisch gleich Null ist. Um die Wärme zurückzuhalten, die sich im Verlauf der chemischen Reaktion der Reduktion von Stickstoffoxiden durch Ammoniak entwickelt hat, kehrt man die Richtung des Hindurchleitens des Abgases durch die Katalysatorschicht gegenüber der vorhergehenden Richtung um. Der Grund dazu, die Richtung des Hindurchleitens des zu reinigenden Gases durch die Katalysatorschicht zu ändern, ist die Erreichung einer vorgegebenen Temperatur (30 bis 400°C) durch das Gasgemisch in einem bestimmten gewählten Abstand von der Einführungsstelle des Abgases in die Katalysatorschicht. Dieser Abstand wird aus dem Intervall von 10 bis 90% von der Gesamthöhe der Katalysatorschicht gewählt. Nach Änderung der Richtung des Hindurchleitens des zu reinigenden Gases wird die Wärme in der Katalysatorschicht, gespeichert in den Schichtabschnitten, die früher als Austrittsabschnitte dienten, zur Erwärmung des Abgases ausgenutzt. Nach Erwärmung des Gases durch Kontakt mit dem heißen Katalysator wird das Reduktionsmittel (das Ammoniak oder die ammoniakhaltige Verbindung) eingeführt. Beim Hindurchleiten des zu reinigenden Gases durch die nachfolgenden Teile der Katalysatorschicht wird eine Wärme entwickelt, welche die früher abgekühlten Abschnitte der Katalysatorschicht erwärmt. Dadurch also, daß man die Richtung des Hindurchleitens des Abgases in der Katalysatorschicht periodisch ändert, gelingt es, bei niedriger Eintrittstemperatur des Abgases (z.B. 20 - 50°C) und der Austrittstemperatur des gereinigten Gases (meist 30 - 200°C) im Zentrum der Schicht die erforderliche Temperatur für eine effektive Durchführung des SKR-Prozesses (180 bis 600°C) zu erzeugen.

Besonders bevorzugt ist es, das Ammoniak oder die ammoniakhaltige Verbindung in der Zone der Höchsttemperaturen einzuführen. Dies schließt die Bildung von Ammoniumsalzen mit der größten Wahrscheinlichkeit aus. Zu diesem Zweck ist die Katalysatorschicht vorzugsweise in gleiche Teile oder in nahen Volumenverhältnissen der Teile der Katalysatorschicht aufzuteilen und das Ammoniak oder die ammoniakhaltige Verbindung zwischen ihnen einzuführen.

Eine der Ursachen für die Senkung der Nutzungsdauer des Katalysators ist die Entstehung von eine unterschiedliche Temperatur aufweisenden Katalysatorabschnitten, was eine lokale Ablagerung von Ammoniumsalzen hervorrufen kann.

Experimentell ist festgestellt worden, daß bei periodischer Richtungsänderung beim Hindurchleiten des Abgases die Zeit der Formierung dieser Abschnitte mehrere Stunden beträgt. Während der Zeit des Hindurchleitens des zu reinigenden Gases in einer Richtung (meist höchstens 60 min) kommen die Temperaturgefälle in den Abschnitten der Katalysatorschicht nicht dazu, ihren Maximalwert zu erreichen, und können zu den Kennziffern des Reinigungsprozesses keinen bedeutenden Beitrag leisten. Die Vermischung des Stickstoffoxide enthaltenden Gasstromes mit Ammoniak beseitigt die Temperaturgefälle in verschiedenen Querschnittspunkten der Katalysatorschicht, welche bei der vorhergehenden Richtung des Hindurchleitens des zu reinigenden Gases entstanden sind.

Vom technologischen Standpunkt aus ist die Aufteilung der Katalysatorschicht in drei oder vier Teile zweckmäßig. Bei einer größeren Anzahl der Teile der Katalysatorschicht steigt der hydraulische Widerstand, wird das Schema der Einführung von Ammoniak oder ammoniakhaltiger Verbindungen komplizierter, verschlechtert sich die aerodynamische Situation, weil die Höhe der einzelnen Teile der Katalysatorschicht klein wird und es sich als sehr kompliziert erweist, die Gleichartigkeit des Gasstromes in diesen Schichtteilen sicherzustellen. Bei Beseitigung dieser technischen Schwierigkeiten kann die Anzahl der Teile der Katalysatorschicht eine beliebige sein.

Die Schaffung einer optimalen Temperaturführung bei der Arbeit der Katalysatorschicht, die Verhinderung von Überhitzungen und einer Abkühlung der Schicht unter den Bedingungen, wo sich der Durchsatz und die Zusammensetzung des Abgases zeitlich ändern, wird durch Richtungsumkehr des Hindurchleitens des Abgases gegenüber der vorhergehenden Richtung bei Erreichung einer vorgegebenen Temperatur (30 bis 400°C) durch das Gasgemisch in einem festen Abstand von der Stelle der Einführung des Abgases in die Katalysatorschicht erzielt, welcher aus dem Intervall von 10 bis 90% von der Gesamthöhe der Katalysatorschicht gewählt wird.

Der genannte untere Temperaturwert des Gasgemisches ist mit Rücksicht auf die Unzweckmässigkeit gewählt, diese Temperatur, die der Temperatur des Abgases am Eintritt in die Katalysatorschicht nahekommt, vorzugeben. Der obere Temperaturwert des Gasgemisches ist durch das Forttragen der Wärme aus der Schicht begrenzt. Bei einer Temperatur des Gasgemisches über 400°C wird eine beträchtliche Wärmemenge durch das gereinigte Gas aus der Schicht fortgetragen. Dies wird von einer Senkung des Reinigungsgrades begleitet.

Bei der Wahl eines auf die Änderung der Temperatur des Gasgemisches abzielenden Abstandes näher zum Eintritt des Abgases als 10% von der Gesamtschicht der Katalysatorschicht finden die Temperaturänderungen zu schnell statt, was durch die Wärmekapazität der Katalysatorschicht und nicht durch die Werte der Konzentration von Stickstoffoxiden bedingt ist. Die Wahl eines Abstandes zur Temperaturänderung des Gasgemisches weiter als 90% von der Gesamthöhe der Schicht vom Eintritt des Abgases ist unzweckmäßig, weil in diesem Fall beliebige unbedeutende Änderungen des Abgasdurchsatzes zum Austritt der Zone der Höchsttemperaturen aus der Katalysatorschicht führen können. Der Reinigungsprozeß wird dabei schlecht steuerbar und instabil.

Zwecks Wärmespeicherung und Schaffung der besten Bedingungen für die Verteilung des Gasgemisches über den Querschnitt der Katalysatorschicht empfiehlt es sich, zwischen den Teilen der Katalysatorschicht ein inertes Material anzuordnen. Dieses Material kann z.B. aus Keramik oder Porzellan bestehende Raschig-Ringe oder zerkleinerten Quarz darstellen. Das inerte Material sichert außerdem den Katalysator gegen Abkühlen im Verlauf des Reinigungsprozesses und verlängert als Folge davon seine Nutzungsdauer.

Die Abgase von Industriebetrieben zeichnen sich durch verschiedenen Gehalt an Stickstoffoxiden aus, und die infolge ihrer Wechselwirkung mit Ammoniak freiwerdende Wärme erweist sich nicht immer als ausreichend, um in der Katalysatorschicht Temperaturzonen zu erzeugen, welche für eine weitgehende Umwandlung von Stickstoffoxiden notwendig sind. In diesem Fall empfiehlt es sich, die Abgase durch die Katalysatorschicht in Anwesenheit eines Kohlenwasserstoff-Brennstoffs hindurchzuleiten, der in einer Menge bis zu 5 kg je 1 Tsd.m³ Abgas genommen ist. Die Brennstoffkomponenten werden am Katalysator unter Entwicklung einer derartigen Wärme oxidiert, die ein erforderliches Temperaturniveau für die Reaktion der Reduktion von NOₓ gewährleistet. Ein Brennstoffverbrauch über 5 kg/Tsd.m³ Abgas ist unzweckmäßig, da er zur Erhöhung des Energieaufwandes und zur Überhitzung des Katalysators führt. Als solcher Brennstoff können beispielsweise Dämpfe von Lösungsmitteln (Aceton, Xylol), brennbare Gase (Propan, Buten), Kerosindämpfe dienen.
Das erfindungsgemäße Verfahren zur Abgasreinigung von Stickstoffoxiden bietet gegenüber den bekannten katalytischen SKR-Methoden die Möglichkeit, den Reinigungsgrad von Gasen bis auf **98-99%** zu erhöhen, die Nutzungsdauer der verwendeten Katalysatoren um 30 bis 60% zu verlängern, und den Energieaufwand für die Durchführung des Reinigungsprozesses bedeutend zu vermindern. Im Vergleich mit den bekannten Methoden kennzeichnet sich das erfindungsgemäße Verfahren durch Einfachheit der Technologie und der apparativen Ausstattung und ist zur Gasreinigung mit erheblichen Schwankungen der Volumina von zu reinigenden Gasen und der Konzentrationen von Stickstoffoxiden anwendbar. Nach dem erfindungsgemäß vorgeschlagenen Verfahren führt man die Reinigung in einem einzigen Apparat ohne Einsatz von speziellen Wärmeaustauschapparaturen durch, was den erforderlichen Metallanteil von Anlagen gegenüber den nach herkömmlichen Verfahren geschaffenen Anlagen um das 2- bis 5-fache herabmindert. Die effektive Ausnutzung der Wärme chemischer Reaktionen im erfindungsgemäßen Verfahren erlaubt es, den Brennstoffaufwand für die Vorwärmung des Abgases mit einer Temperatur des letzteren von 5 bis 150°C auszuschliessen.

Die Anwendung des erfindungsgemäß vorgeschlagenen Verfahrens macht es möglich, das überschüssige Ammoniak (gegenüber dem stöchiometrisch notwendigen) unschädlich zu machen, welches bei Verminderung des Abgasvolumens oder der Konzentration von Stickstoffoxiden im Abgas erscheint. Somit ist das Auftreten von Ammoniak am Austritt ausgeschlossen.

Bei der Durchführung des erfindungsgemäßen Verfahrens wird in Hinsicht auf den Grad der Abgasreinigung von Stickstoffoxiden und den Ammoniakgehalt in den gereinigten Gasen die Einhaltung neuzeitlicher sanitärer Vorschriften sichergestellt. Das erfindungsgemäße Verfahren ermöglicht es, den erforderlichen Reinigungsgrad an verschiedenen Typen von zur Durchführung von SKR-Prozessen geeigneten Katalysatoren zu erzielen.

Das Verfahren zur Abgasreinigung von Stickstoffoxiden ist einfach in der technologischen Ausführung und wird folgenderweise realisiert.

Die Reinigung bringt man in einem Reaktor zustande, der eine mindestens in zwei Teile aufgeteilte Katalysatorschicht aufnimmt. Vor dem Reinigungsbeginn erwärmt man die Katalysatorschicht auf die Temperatur des Beginns der Reaktion der Wechselwirkung von Stickstoffoxiden mit Ammoniak oder einer ammoniakhaltigen Verbindung. Nach dem Hindurchleiten durch einen oder mehr Teile des Katalysators wird das zu reinigende Gas auf eine Temperatur erwärmt, bei welcher die Reaktion der Wechselwirkung von Stickstoffoxiden mit dem Ammoniak oder der ammoniakhaltigen Verbindung mit hoher Geschwindigkeit verläuft.

Dann führt man in den Raum zwischen den Teilen der Katalysatorschicht das Ammoniak oder die ammoniakhaltige Verbindung in einer stöchiometrisch erforderlichen Menge ein. Die Einführung des Ammoniaks oder der ammoniakhaltigen Verbindung nimmt man beispielsweise durch Einblasen durch ein perforiertes Rohr oder einen Verteilungsrohrboden vor. Nach dem Vermischen der Abgase mit dem Ammoniak oder der ammoniakhaltigen Verbindung leitet man das Gemisch durch die nachfolgenden Teile der Katalysatorschicht durch einen Teil oder mehrere hindurch. Das hindurchzuleitende Gasgemisch reagiert am Katalysator unter Wärmeentwicklung. Die sich entwickelnde Wärme erwärmt die Abschnitte der Katalysatorschicht, welche am Austritt des gereinigten Gases aus dem Reaktor anliegen. Das von den Stickstoffoxiden gereinigte Gas wird in die Atmosphäre ausgestoßen.

Das durch die Katalysatorschicht hindurchgeleitete Abgas verändert seine Temperatur: zuerst erwärmt es sich, dann reagiert es mit dem Ammoniak oder der ammoniakhaltigen Verbindung unter Wärmeentwicklung und kühlt sich schließlich ab, indem es seine Wärme an den Katalysator abgibt. Nachdem das Gasgemisch eine Temperatur von 30 bis 400°C in einem Abstand von der Einführungsstelle des Abgases in die Katalysatorschicht gleich 10 bis 90% von der Gesamthöhe der Katalysatorschicht erreicht hat, kehrt man die Richtung des Hindurchleitens des zu reinigenden Gases gegenüber der vorhergehenden Richtung mit Hilfe einer Gasumschalteinrichtung oder eines Systems von Gasventilen um. Die Teile der Katalysatorschicht, die früher Austrittsteile waren, werden dabei Eintrittsteile. Die erwärmten Teile der Katalysatorschicht (ein Teil oder mehr) dienen zur Vorwärmung des Abgases. Nachdem man zwischen den Teilen der Katalysatorschicht das Ammoniak oder die ammoniakhaltige Verbindung eingeführt hat, leitet man das Gemisch mit dem Abgas durch die nachfolgenden Teile der Katalysatorschicht - einen oder mehrere Teile - hindurch, wo die Reinigung der Gase von Stickstoffoxiden erfolgt. Hiernach wird das gereinigte Gas in die Atmosphäre ausgestoßen. Die Richtung des Hindurchleitens des Abgases kehrt man abermals um, nachdem das Gasgemisch eine vorgegebene Temperatur von 30 bis 400°C in einem gewählten Abstand (10 bis 90% von der Gesamthöhe der Katalysatorschicht) von der Einführungsstelle des Abgases in die Katalysatorschicht erreicht hat. Des weiteren bewerkstelligt man die Reinigung, indem man die Richtung des Hindurchleitens des zu reinigenden Gases durch die Katalysatorschicht gegenüber der vorhergehenden Richtung regelmäßig umkehrt. Falls ein inertes Material verwendet wird, ordnet man es zwischen den Teilen der Katalysatorschicht z.B. auf einem Rost an. Das Ammoniak oder die ammoniakhaltige Verbindung führt man unmittelbar dem inerten Material zu, und der Prozeß wird wie vorstehend beschrieben geführt.

Bei einer Konzentration von Stickstoffoxiden beispielsweise von 0,7 bis 2,0 g/m³ nimmt man die Abgasreinigung in Anwesenheit eines Kohlenwasserstoff-Brennstoffes vor. Den Kohlenwasserstoff-Brennstoff kann man entweder gemeinsam mit den Abgasen oder zwischen den Teilen der Katalysatorschicht einführen.

Zum besseren Verständnis der vorliegenden Erfindung werden folgende Beispiele angeführt.

### Beispiel 1.

Ein Abgas mit der Konzentration von Stickstoffoxiden von 6 g/m³ führt man einem Reaktor zu, der mit einer Schicht eines körnigen oxidischen Vanadinkatalysators mit 1,0 m Höhe beschickt ist. Die Katalysatorschicht im Reaktor besteht aus zwei Teilen zu je 0,5 m. Die Abgastemperatur ist gleich 10°C, die lineare Geschwindigkeit am Eintritt in die Katalysatorschicht beträgt 0,6 m/s. Die Katalysatorschicht wärmt man auf die Temperatur von 220°C vor.

Das Stickstoffoxide enthaltende Gas leitet man durch den ersten Teil der Katalysatorschicht hindurch. Dann führt man mit Hilfe eines Systems von Verteilungsrohren gasförmiges Ammoniak in einer stöchiometrisch erforderlichen Menge zwischen den Schichten ein. Nach dem Vermischen leitet man das erhaltene Gasgemisch durch den zweiten Teil der Katalysatorschicht hindurch, an welcher die Reinigung von Stickstoffoxiden erfolgt.

Das gereinigte Gas wird in die Atmosphäre ausgestoßen. Die Reinigung des Gases von Stickstoffoxiden geschieht bei einer Temperatur an der Katalysatorschicht von 180 bis 400°C. Hat das Gasgemisch die Temperatur von 30°C im Abstand 0,1 m (10% von der Höhe der Katalysatorschicht) von der Einführungsstelle des Abgases in die Katalysatorschicht erreicht, kehrt man die Richtung des Hindurchleitens des Gases um. Der Grad der Reinigung des Abgases von Stickstoffoxiden beträgt 99,5%. Der Restammoniakgehalt in den gereinigten Gasen beträgt 10 ppm.

### Beispiel 2

Ein zu reinigendes Abgas enthält 1,5 g/m³ Stickstoffoxide. Ein Edelmetalle enthaltender Katalysator auf Basis von Vanadinpentoxid und Titandioxid weist die Form von Blöcken mit durchgehenden Kanälen auf. Die Katalysatorschicht besteht aus drei Teilen zu je 0,5 m, zwischen denen Schichten eines inerten Materials (Raschig-Porzellanringe mit der Abmessung 15x15x3 mm) untergebracht sind. Die Katalysatorschicht und die Schichten des inerten Materials sind auf die Temperatur von 300°C vorgewärmt.

Die Abgastemperatur am Eintritt in die Katalysatorschicht beträgt 50°C, die Gasgeschwindigkeit 0,5 m/s. Das Abgas vermischt man vorher mit einem Kohlenwasserstoff Brennstoff - Propan - in einer Menge von 0,5 kg je 1 Tsd.m³ Abgas. Das erhaltene Gemisch leitet man durch den ersten Teil der Katalysatorschicht und dann durch die Schicht des inerten Materials hindurch, in welches mit Hilfe eines Systems von Düsen eine 25%-ige wäßrige Harnstofflösung in der halben Menge der stöchiometrisch erforderlichen Menge eingeführt wird. Das erhaltene Gemisch leitet man durch den zweiten Teil der Katalysatorschicht hindurch, wo eine teilweise Reinigung von Stickstoffoxiden und die Oxidation der Komponenten des Kohlenwasserstoff-Brennstoffes erfolgen, und dann durch die zweite Schicht des inerten Materials, wo die Vermischung mit der übriggebliebenen Menge des stöchiometrisch erforderlichen Reduktionsmittels (der 25%-igen wäßrigen Harnstofflösung) stattfindet.

Beim Passieren durch den übriggebliebenen Teil der Katalysatorschicht wird das Gas von Stickstoffoxiden und Brennstoffkomponenten endgültig gereinigt, worauf es in die Atmosphäre ausgestoßen wird. Die Temperatur, bei welcher die Reinigung der Gase von Stickstoffoxiden vor sich geht, beträgt 300 bis 450°C. Die Richtung des Hindurchleitens des Abgases kehrt man um, nachdem das Gasgemisch die Temperatur 300°C im Abstand von 33% von der Gesamthöhe der Katalysatorschicht von der Einführungsstelle des Abgases in die Katalysatorschicht erreicht hat. Der Grad der Reinigung von Stickstoffoxiden beträgt 98%. Der Restammoniakgehalt im gereinigten Gas 2 - 3 ppm.

### Beispiel 3.

Ein Abgas mit der Konzentration von Stickstoffoxiden von 10 g/m3 führt man einem Reaktor zu, der mit einer Schicht eines oxidischen Vanadinkatalysators beschickt ist, welche in zwei Teile zu je 0,4 m aufgeteilt ist, zwischen denen sich ein inertes Material befindet (Raschig-Keramik-Ringe mit der Abmessung 25x25x4 mm). Die Abgastemperatur ist gleich 20°C, die lineare Geschwindigkeit am Eintritt in die Katalysatorschicht beträgt 0,7 m/s. Die Katalysatorschicht und die Schicht des inerten Materials sind auf die Temperatur von 240°C vorgewärmt. Das Abgas leitet man durch den ersten Teil der Katalysatorschicht hindurch und führt es der Schicht des inerten Materials zu, in welche man über einen Verteilerrost mit Löchern verdampftes Ammoniakwasser in einer stöchiometrisch erforderlichen Menge einführt. Das erhaltene Gasgemisch leitet man durch den zweiten Teil der Katalysatorschicht hindurch, in welchem die Reinigung von Stickstoffoxiden erfolgt. Die Temperatur, bei welcher die Gasreinigung vor sich geht, beträgt 400 bis 600°C. Das gereinigte Gas wird in die Atmosphäre ausgestoßen. Die Richtung des Hindurchleitens des Abgases kehrt man um, nachdem das Gasgemisch die Temperatur von 400°C im Abstand 0,6 m (75% der Gesamthöhe der Katalysatorschicht) von der Einführungsstelle des Abgases in die Katalysatorschicht erreicht hat. Der Grad der Reinigung des Gases von Stickstoffoxiden beträgt 99%. Der Restammoniakgehalt im gereinigten Gas ist gleich 1 bis 2 ppm.

### Beispiel 4

Ein zu reinigendes Abgas enthält 0,6 g/m³ Stickstoffoxide und hat die Temperatur von 30°C. Das Abgas vermischt man mit einem Kohlenwasserstoff-Brennstoff (Kerosindämpfen) in einer Menge von 5 kg je 1 Tsd.m3 Abgas und führt es mit der linearen Geschwindigkeit von 1 m/s einem Reaktor zu, der mit einem körnigen Eisenchromkatalysator in Form von Ringen mit den Abmessungen 25x25x4 mm beschickt ist. Die Katalysatorschicht ist in zwei gleiche Teile zu je 0,8 m aufgeteilt und auf die Temperatur von 350°C vorgewärmt. Das Gemisch des Abgases mit dem Kohlenwasserstoff-Brennstoff leitet man durch den ersten Teil der Katalysatorschicht hindurch, an welchem die Oxidation des Kohlenwasserstoff-Brennstoffes unter Wärmeentwicklung stattfindet. Dann führt man zwischen den Teilen der Katalysatorschicht mit Hilfe eines Systems von Gasverteilungsrohren gasförmiges Ammoniak in einer stöchiometrisch erforderlichen Menge ein. Nach dem Vermischen leitet man das erhaltene Gasgemisch durch den zweiten Teil der Katalysatorschicht hindurch, in welchem die Reinigung von Stickstoffoxiden geschieht. Das gereinigte Gas wird in die Atmosphäre ausgestoßen. Die Gasreinigung von Stickstoffoxiden wird bei einer Temperatur in der Katalysatorschicht von 400 bis 550°C durchgeführt.

Nachdem das Gasgemisch die Temperatur von 400°C im Abstand 1,44 m (9O% von der Gesamthöhe der Katalysatorschicht) von der Einführungsstelle des Abgases in die Katalysatorschicht erreicht hat, kehrt man die Richtung des Hindurchleitens des Abgases um. Der Grad der Reinigung des Gases von Stickstoffoxiden beträgt 99,9%, der Rest Ammoniakgehalt im gereinigten Gas ist gleich 1 ppm.

Die Erfindung löst Probleme des Schutzes der Atmosphäre vor Verunreinigung durch toxische Beimengungen - Stickstoffoxide (NOₓ). Die Erfindung kann bei der Entgiftung der Abgase verschiedener Produktionsbetriebe von Stickstoffoxiden Anwendung finden.

## Patentansprüche

1. Verfahren zur Reinigung von Abgasen von Stickstoffoxiden durch Hindurchleiten der Abgase durch eine Katalysatorschicht in Anwesenheit von Ammoniak oder einer ammoniakhaltigen Verbindung bei einer Temperatur zwischen 180 und 600°C unter Gewinnung eines gereinigten Gases, wobei die Katalysatorschicht aus mindestens zwei Teilen besteht, **dadurch gekennzeichnet, daß** das Ammoniak oder die ammoniakhaltige Verbindung zwischen die Teile der Katalysatorschicht eingeführt wird und daß die Abgasrichtung durch die Katalysatorschicht und damit die Ableitrichtung des gereinigten Gases bei Erreichen einer Temperatur des Gasgemisches von 30 bis 400°C in einem Abstand von der Eintrittsstelle des Abgases in die Katalysatorschicht von 10 bis 90% der Gesamthöhe der Katalysatorschicht periodisch gegenüber der vorherigen Richtung umgekehrt wird.

2. Verfahren nach Anspruch 1, dadurch gekennzeichnet, daß zwischen den Teilen der Katalysatorschicht ein inertes Material angeordnet wird

3. Verfahren nach Anspruch 1 oder 2, dadurch gekennzeichnet, daß die Abgase durch die Katalysatorschicht in Anwesenheit eines Kohlenwasserstoff-Brennstoffes, genommen in einer Menge bis zu 5 kg je Tsd. m³ Abgas, hindurchgeleitet werden.

## Claims

1. Process for removing nitrogen oxides from waste gases by passing the waste gases through a catalyst bed in the presence of ammonia or an ammonia-containing compound at a temperature between 180 and 600°C to obtain a purified gas, with the catalyst bed consisting of at least two parts, characterized in that the ammonia or the ammonia-containing compound is introduced between the parts of the catalyst bed and thus the waste gas direction through the catalyst bed and thus the outflow direction of the purified gas is periodically reversed on reaching a temperature of the gas mixture of from 30 to 400°C at a distance from the inlet point of the waste gas into the catalyst bed of from 10 to 90% of the total height of the catalyst bed.

2. Process according to Claim 1, characterized in that an inert material is arranged between the parts of the catalyst bed.

3. Process according to Claim 1 or 2, characterized in that the waste gases are passed through the catalyst bed in the presence of a hydrocarbon fuel, used in an amount of up to 5 kg per thousand m³ of waste gas.

## Revendications

1. Procédé destiné à débarrasser des gaz d'échappement des oxydes d'azote, consistant à faire circuler les gaz d'échappement à travers une couche de catalyseur en présence d'ammoniac ou d'un compose contenant de l'ammoniac à une température comprise entre 180 et 600°C et à obtenir un gaz épuré, la couche de catalyseur étant constituée d'au moins deux parties, caractérisé en ce qu'on introduit l'ammoniac ou le composé contenant de l'ammoniac entre les parties de la couche de catalyseur, et en ce qu'on inverse périodiquement la direction de circulation du gaz d'échappement à travers la couche de catalyseur, et donc celle de l'évacuation du gaz épuré, par rapport à la direction précédente, lorsque le mélange gazeux a atteint une température de 30 à 400°C à une distance, mesurée à partir de l'endroit de l'introduction du gaz d'échappement dans la couche de catalyseur, constituant 10 à 90 % de la hauteur totale de la couche de catalyseur.

2. Procédé selon la revendication 1, caractérisé en ce qu'un matériau inerte se trouve entre les parties de la couche de catalyseur,

3. Procédé selon la revendication 1 ou 2, caractérisé en ce qu'on fait circuler les gaz d'échappement à travers la couche de catalyseur en présence d'un combustible hydrocarboné pris dans une quantité allant jusqu'à 5 kg par 1000 m³ de gaz d'échappement.
